# EUROPÄISCHE PATENTSCHRIFT

(11) **EP 1 925 268 B1**
(45) Veröffentlichungstag und Bekanntmachung des Hinweises auf die Patenterteilung: **21.09.2011**
(21) Anmeldenummer: 07121481.1
(22) Anmeldetag: 26.11.2007
(51) Int. Cl.: A61C 8/00

(54) **Angussabutment mit verbesserter Geometrie**
Cast abutment with enhanced geometry
Butée de moulage à géométrie améliorée

(30) Priorität: 27.11.2006 EP 06124797
(43) Veröffentlichungstag der Anmeldung: 28.05.2008
(73) Patentinhaber: Straumann Holding AG, 4002 Basel (CH)
(72) Erfinder: Kast, Holger, 79341 Kenzingen (DE); Guenter, Daniel, 4437, Waldenburg (CH)
(74) Vertreter: Modiano, Micaela Nadia

(56) Entgegenhaltungen:
- US-A- 5 116 225
- US-A- 5 662 473

## Beschreibung

Die vorliegende Erfindung betrifft allgemein ein Angussabutment für ein Dentalimplantat mit verbesserter Geometrie und insbesondere ein Angussabutment für ein Dentalimplantat mit verbesserter Geometrie, das für die Herstellung eines Zahnersatzes aus einem Edelmetall wie beispielsweise Gold oder aus einer Metalllegierung mittels eines Wachsausschmelzverfahrens geeignet ist.

### Stand der Technik

In der Zahnmedizin sind Angussabutments zur Aufnahme einer Zahnprothese vielfältig bekannt geworden. Auf den okklusalen Teil des Angussabutments wird ein dem natürlichen Zahn nachgebildeter Aufbau (Zahnersatz) angebracht. Diese werden dann mit einem meist dübelähnlichen Dentalimplantat mechanisch verbunden, das vorher im Kieferknochen eines Patienten implantiert wurde.

Derartige Aufbauten werden bekanntlich folgendermaßen hergestellt. Zuerst wird ein Wachsmodell auf dem Angussabutment modelliert, das der Form des natürlichen nachzubildenden Zahnes nachempfunden ist, Das Wachsmodell wird meist mit einer auf das Angussabutment aufgesteckten Modellierhilfe aus Kunststoff erstellt, welche die Bearbeitung erleichtert und den Zugangskanal für die Okklusalschraube freihält. Am Ende der Modellierung entsteht ein Aufbau auf dem Angussabutment aus Wachs.

Das Angussabutment mit aufmodelliertem Wachsaufbau wird anschließend in eine Einbettmasse eingebettet. Während dem für den Giessprozess nötigen Aufheizen der Gussform verdampfen das Wachs des Zahnmodells und die Modellierhilfe rückstandslos. Daraus entsteht die Negativform, die später mit einem Edelmetall wie beispielsweise Gold oder eine Edelmetalllegierung (nachstehend zur Vereinfachung als Edelmetall bezeichnet) ausgegossen wird. Somit entsteht ein Metallmodell, das dem auf das Angussabutment aufmodellierten Wachsaufbau entspricht (nachstehend zur Vereinfachung als Angussmodell bezeichnet).

Obiges Verfahren wird, wie im Stand der Technik wohl bekannt, als Wachsausschmelzverfahrens (lost wax method) bezeichnet.

Nach Erstellung des Angussmodells wird dieses dann üblicherweise mit einer Keramikschicht verblendet, um so eine möglichst naturgetreue Nachbildung des zu ersetzenden Zahnes zu erzielen.

Bei der Erstellung des Angussmodells mit Hilfe des herkömmlichen Wachsausschmelzverfahrens hat sich herausgestellt, dass es dabei zu einem Überlaufen des Edelmetalls unter die Kragenfläche des Angussabutments kommen kann, das unerwünschte Effekte wie zum Beispiel Gussperlen zur Folge hat. Das Überlaufen ist auf unzureichend gereinigte Flächen des Angussabutments zurückzuführen. Gussfehler können zu einer ungenauen Passung oder Spaltbildung zwischen Angussabutment und Dentalimplantat führen. Solche fehlerhaften Angussmodelle sind aufgrund der hohen Anforderungen an eine exakte Verbindung zwischen Angussabutment und Dentalimplantat sowie die Langzeitanforderungen für Dentalprothesen nicht zu benutzen und müssen neu hergestellt werden.

Darüber hinaus ist bei Angussabutments mit einer gerade verlaufenden Kragenfläche (d. h. einer vertikal zur Längsachse des Angussabutments verlaufenden Kragenfläche) besonders problematisch, dass diese beim Anguss des Edelmetalls häufig zu einem Überlaufen oder einem Überschiessen der eingegossenen, auf hohe Temperaturen erhitzten, hochflüssigen Edelmetallschmelze neigen. Dies ist unter Anderem auf ein ungünstiges Fliessverhalten der Edelmetallschmelze auf die Kragenfläche des Angussabutments zurückzuführen.

Zur Behebung des obigen Problems wird für gewöhnlich eine Schicht aus Grafit als Goldstopp in den Bereichen, in denen man den Fluss der Schmelze des Edelmetalls stoppen will, aufgebracht. Dies führt jedoch in den Kontaktbereichen zwischen dem Edelmetall und der mit Grafit bedeckten Fläche unvorteilhaft dazu, dass Grafitpartikel das Edelmetall verunreinigen können.

Aus der US-A-5 662 473 ist ein Angussabutment gemäß Oberbegriff des Anspruchs 1 bekannt.

Daher wäre es wünschenswert ein verbessertes Angussabutment bereitzustellen, das auch nach dem Giessprozess eine fehlerfreie Verbindung zwischen dem Angussmodell und dem Dentalimplantat bereitzustellen vermag. Dies ist im Besonderen von Bedeutung, da die beim Kauvorgang entstehenden hohen Druckkräfte immens hohe Anforderungen an die verwendeten Materialien und die Passgenauigkeit stellen, die die Verbindung zwischen Angussmodell und dem Dentalimplantat bilden. Geringe Fehler bei der Modellerstellung und beim Angussvorgang können dazu führen, dass das Metallmodell des Zahnersatzes nicht mehr zu benutzen ist oder mit erheblichem Aufwand nachgearbeitet werden muss. Auch eventuell auftretende Risse, Verunreinigungen, Spalten oder Unebenheiten müssen vermieden werden, da dies der mechanischen Langzeitfestigkeit schadet.

### Zusammenfassung der Erfindung

Der vorliegenden Erfindung liegt daher die Aufgabe zugrunde, ein Angussabutment mit einer verbesserten Geometrie für ein Dentalimplantat bereitzustellen, das die oben angeführten Probleme vermeidet.

Im Rahmen dieser Aufgabe besteht eine besondere Aufgabe der vorliegenden Erfindung darin, ein Angussabutment für ein Dentalimplantat zu realisieren, das eine Bremsung des angegossenen Edelmetalls des Zahnersatzes bewirkt.

Darüber hinaus besteht eine besondere Aufgabe der vorliegenden Erfindung in der Bereitstellung eines Angussabutments für ein Dentalimplantat, das ein optimiertes Fliessverhalten der Edelmetallschmelze sicherstellt.

Des Weiteren ist es eine Aufgabe der vorliegenden Erfindung ein Angussabutment zu realisieren, das die Verwendung von Grafit als Barriere oder Edelmetallstopp für die Edelmetallschmelze minimiert. Somit kann Grafit bis auf geringe Anwendungsbereiche vermieden werden.

Die obigen Aufgaben und weitere der nachfolgenden Beschreibung zu entnehmenden Aufgaben werden durch ein Angussabutment gemäß Anspruch 1 erfüllt. Vorteilhafte Weiterbildungen der gegenwärtigen Erfindung sind Gegenstand der Unteransprüche.

### Kurzbeschreibung der Figuren

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Dabei zeigen:
Fig. 1A eine Seiten- oder approximale Ansicht eines Angussabutments gemäß einer bevorzugten Ausführungsform der Erfindung;
Fig. 1B eine Ansicht von schräg unten der Fig. 1A;
Fig. 2A eine approximale Ansicht eines Angussabutments der Fig. 1A im Vollschnitt mit aufgesteckter Modellierhilfe; und
Fig. 2B eine Aufsicht von schräg oben der Fig. 2A.

### Beschreibung der bevorzugten Ausführungsformen der Erfindung

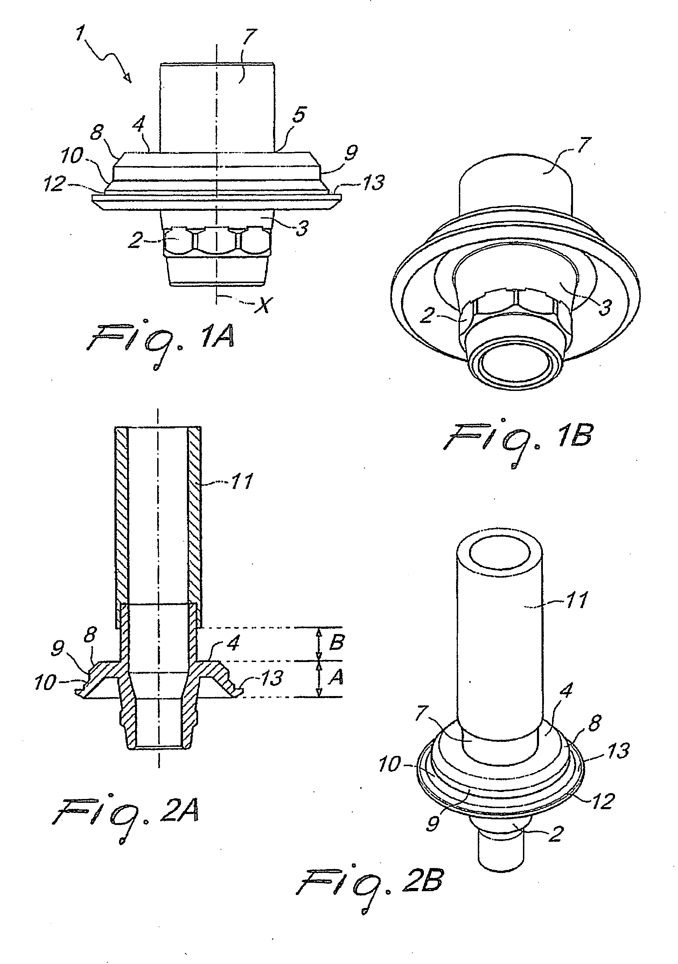

Unter Bezugnahme auf die Figuren 1A und 1B wird eine derzeit bevorzugte Ausführungsform des Angussabutments für ein Dentalimplantat mit verbesserter Geometrie, gemäß der vorliegenden Erfindung beschrieben. Das mit dem Bezugszeichen 1 allgemein gekennzeichnete Angussabutment verfügt über einen apikalen Sockelteil 2, einen an das Sockelteil 2 koronal anschließenden Übergangsteil 3, an das koronal ein okklusales Teil 7 mit einem apikal liegenden, umlaufenden Kragenbereich A anschliesst, wobei der Kragenbereich A mit einer axial näher liegenden ersten Plattform 4 und mit mindestens zwei anschliessenden umlaufenden Stufenbereichen 8, 9 bzw. 10, 12 ausgebildet ist, die zusammen eine Kragenfläche bilden, wobei der größte Durchmesser eines ersten Stufenbereichs 8, 9 kleiner ist als der kleinste Durchmesser eines, in Bezug auf den ersten Stufenbereich 8, 9 apikal gelegenen, zweiten Stufenbereichs 10, 12. Anders ausgedruckt, wirken die zwei Stufenbereiche 8, 9 bzw. 10, 12 wie eine sich von der ersten Plattform radial nach außen erstreckende Treppe.

Das okklusale Teil 7 ist rotationssymmetrisch und hat im Wesentlichen eine Zylinderform. Daran anschließend erstreckt sich im Wesentlichen in horizontaler Richtung die erste Plattform 4, die an der medialen Seite an die Aussenkante 5 der Zylinderform des okklusalen Teils 7 angrenzt und im Wesentlichen eben ausgebildet ist. Die erste Plattform 4 weist bevorzugt einen Winkel von 80 bis 100 Grad in Bezug auf die Längsachse des Angussabutments 1 auf und noch bevorzugter einen Winkel von etwa 90 Grad in Bezug auf die Längsachse des Angussabutments 1.

Die erste Plattform 4 geht an deren distaler Seite in einen ersten abgeschrägten Abschnitt 8 des ersten Stufenbereichs 8, 9 über, der bevorzugt mit einem Winkel von 35 bis 55 Grad und noch bevorzugter von etwa 45 Grad in Bezug auf die Längsachse des Angussabutments 1 nach unten geneigt ist. Die erste Plattform 4 ist in einer bevorzugten Ausführungsform 1,5 bis 2 mal so breit wie die Gesamthöhe des ersten Stufenbereichs 8, 9.

An der Endkante des ersten abgeschrägten Abschnitts 8 schliesst sich ein erster vertikaler Abschnitt 9 an, der in Bezug auf die Längsachse des Angussabutments 1 im Wesentlichen parallel verläuft. Der erste vertikale Abschnitt 9 hat etwa die Höhe des darüber liegenden ersten abgeschrägten Abschnitts 8.

Der erste vertikale Abschnitt 9 geht in einen zweiten abgeschrägten Anschnitt 10 des zweiten Stufenbereichs 10, 12 über, der ebenfalls bevorzugt mit einem Winkel von 35 bis 55 Grad und noch bevorzugter einen Winkel von 45 Grad in Bezug auf die Längsachse des Angussabutments 1 nach unten geneigt ist und an den sich ein zweiter vertikaler Abschnitt 12 anschliesst, der im Wesentlichen parallel in Bezug auf die Längsachse des Angussabutments 1 verläuft und der circa 25% der Höhe des ersten vertikalen Abschnitts 9 aufweist.

Direkt an den zweiten vertikalen Abschnitt 12 anschliessend, erstreckt sich vorzugsweise eine zweite Plattform 13, die etwa ein Drittel der Breite der ersten Plattform 4 aufweist. Die zweite Plattform 13 erstreckt sich ebenfalls in horizontaler Richtung und ist im Wesentlichen eben. Die zweite Plattform 13 weist analog zur ersten Plattform 4 bevorzugt einen Winkel von 80 bis 100 Grad in Bezug auf die Längsachse des Angussabutments 1 auf und noch bevorzugter einen Winkel von etwa 90 Grad in Bezug auf die Längsachse des Angussabutments 1. Soweit vorhanden, bildet die zweite Plattform 13 auch einen Teil der Kragenfläche.

Figur 2A und 2B zeigen das erfindungsgemäße Angussabutment 1 mit aufgesteckter zylinderförmige Modellierhilfe 11, die aus ausbrennbarem Kunststoff besteht und sich leicht auf das Angussabutment 1 aufsetzen lässt, in verschiedenen Ansichten. Kunststoff muss immer mit einer gewissen Wachsstärke überdeckt werden, welche in der Muffel als "Puffer" bezüglich Quellung des Kunststoffes beim Ausbrennvorgang dient. Ohne solch einen "Puffer" kann es zu einem Sprengen der Einbettmasse kommen. Daher wird der vorgefertigte Kunststoffkanal nur zu einem gewissen Anteil im okklusalen Bereich über das Angussgoldteil gesteckt, um im unteren Bereich des Angussteils genügend Platz für eine höchst mögliche individuelle Wachsmodellierung zu gewähren (Bereich B). In dem mit Bezugszeichen A bezeichneten Kragenbereich sind die zwei Plattformen 4, 13 und die mindestens zwei Stufenbereiche 8, 9, bzw. 10, 12 angeordnet, die ein sehr gleichmäßiges Umfliessen der Kragenfläche ermöglichen, wenn die flüssige Metalllegierung durch einen Kanal in der Einbettmasse (nicht dargestellt) eingegossen wird.

Die von den Plattformen 4, 13 und den Stufenbereichen 8, 9 bzw. 10, 12 gebildeten Lagen, die wie eine Treppe wirken, bremsen damit so auch die Schmelze des Edelmetalls zu den Endbereichen des Angussabutments 1 und vermeiden die Aufbringung von eventuellen Barrieren, wie zum Beispiel Grafit. Die erste Plattform 4 ist vorteilhaft breiter ausgeführt, um so eine grosse Kontaktfläche der Schmelze des Edelmetalls mit dem okklusalen Teil 7 und der ersten Plattform 4 zu erlauben. Die Stufenbereiche 8, 9, bzw. 10, 12 vermindern dabei vorteilhaft die aufzubringende Menge von Edelmetall, da dies nur in den Aussenbereichen aufgebracht werden muss. Die Stufenbereiche 8, 9, bzw. 10, 12 bewirken eine über die Kragenfläche ähnlich bleibende Wandstärke des Metallmodells, was ebenfalls wirksam ist zur Verminderung des thermischen Schocks beim Aufprall der eingeschlossenen hoch erhitzten Edelmetallschmelze auf die dazu relativ kühle Kragenfläche und somit zur Vermeidung einer Verformung des Angussabutments 1 führen.

Obwohl die Erfindung in Verbindung mit einem einteiligen Angussabutment beschrieben wurde, ist für den einschlägig versierten Fachmann ohne weiteres verständlich, dass sie analog auf zweiteilige Angussabutments übertragbar ist, wobei selbstverständlich dieselben Vorteile wie im Zusammenhang mit einem einteiligen Angussabutment beschrieben, erzielt werden. Auch kann die Anzahl der Stufenbereiche in Bezug auf die gezeigte Ausführungsform erhöht werden, wobei in der Praxis auch gute Ergebnisse mit drei, vier oder fünf Stufenbereichen erzielt wurden. In der Tat ist in der Praxis wünschenswert die Anzahl der Stufenbereiche zu maximieren, wobei deren Anzahl letztendlich, wie dem Fachmann bekannt, unter Berücksichtigung des verfügbaren Raumes und Fertigungszwängen zu wählen ist.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

## Patentansprüche

1. Angussabutment (1) für ein Dentalimplantat , das folgendes umfasst:
ein apikales Sockelteil (2), und
ein okklusales Teil (7) mit einem apikal liegenden umlaufenden Kragenbereich (A), **gekennzeichnet durch**
ein an das Sockelteil (2) koronal anschließendes Übergangsteil (3),
das an das Übergangsteil (3) koronal anschließende okklusale Teil (7),
wobei der Kragenbereich (A) mit einer axial näher liegenden ersten umlaufenden Plattform (4) und mit mindestens zwei anschließenden umlaufenden Stufenbereichen (8, 9, 10, 12) ausgebildet ist, und
wobei der größte Durchmesser eines ersten Stufenbereichs (8, 9) kleiner ist als der kleinste Durchmesser eines, in Bezug auf den ersten Stufenbereich (8, 9) apikal gelegenen, zweiten Stufenbereichs (10, 12).

2. Angussabutment (1) nach Anspruch 1, wobei jeder Stufenbereich (8, 9, 10, 12) in Bezug auf die Längsachse des Angussabutments (1) mit einem abgeschrägten Abschnitt (8, 10) und mit einem im Wesentlichen vertikalen Abschnitt (9, 12) ausgebildet ist.

3. Angussabutment (1) nach Anspruch 2, wobei der erste abgeschrägte Abschnitt (8) des ersten Stufenbereichs (8, 9) und/oder der zweite abgeschrägte Abschnitt (10) des zweiten Stufenbereichs (10, 12) in einem Winkel von 35 bis 55 Grad in Bezug auf die Längsachse des Angussabutments (1) geneigt ist.

4. Angussabutment (1) nach Anspruch 3, wobei der Winkel des ersten abgeschrägten Abschnitts (8) etwa 45 Grad und/oder der Winkel des zweiten abgeschrägten Abschnitts (10) etwa 45 Grad beträgt.

5. Angussabutment (1) nach einem oder mehreren der Ansprüche 1 bis 4, das weiterhin eine zweite umlaufende Plattform (13) umfasst, die an den am weitesten axial liegenden Stufenbereich (10, 12) angrenzt.

6. Angussabutment (1) nach einem oder mehreren der Ansprüche 1 bis 5, wobei die erste Plattform (4) und/oder die zweite Plattform (13) in einem Winkel von 80 bis 100 Grad in Bezug auf die Längsachse des Angussabutments (1) geneigt ist.

7. Angussabutment (1) nach Anspruch 6, wobei der Winkel der ersten Plattform (4) etwa 90 Grad und/oder der Winkel der zweiten Plattform (13) etwa 90 Grad beträgt.

8. Angussabutment (1) nach einem oder mehreren der Ansprüche 1-7, wobei die radiale Breite der ersten Plattform (4) etwa das 1,5-fache der Gesamthöhe des ersten Stufenbereichs (8, 9) beträgt.

9. Angussabutment (1) nach einem oder mehreren der Ansprüche 1-7, wobei die radiale Breite der ersten Plattform (4) etwa das 2-fache der Gesamthöhe des ersten Stufenbereichs (8, 9) beträgt.

10. Angussabutment (1) nach einem oder mehreren der Ansprüche 1-9, wobei die erste Plattform (4) radial Breiter ausgefüht ist als die Stufenbereiche (8, 9, 10, 12).

11. Angussabutment (1) nach einem oder mehreren der Ansprüche 1-10, das mindestens drei und vorzugsweise vier Stufenbereiche umfasst.

12. Angussabutment (1) nach einem oder mehreren der Ansprüche 1-11, das einen Bereich (B) aufweist, der frei von einer Modellierhilfe ist.

## Claims

1. Cast abutment (1) for a dental implant, comprising:
an apical socket portion (2), and
an occlusal portion (7) with an apical circumferential collar portion (A), **characterized by** a transition portion (3) bordering coronally on the socket portion (2),
the occlusal portion (7) bordering coronally on the transition portion (3),
the collar portion (A) being formed with an axially closer first circumferential platform (4) and
with at least two adjacent circumferential step portions (8, 9, 10, 12), and
where the largest diameter of a first step portion (8, 9) is smaller than the smallest diameter of a second step portion (10, 12) positioned apically with respect to the first step portion (8, 9).

2. Cast abutment (1) according to Claim 1, where each step portion (8, 9, 10, 12) is formed with a chamfered portion (8, 10) and with a substantially vertical portion (9, 12) with respect to the longitudinal axis of the cast abutment (1).

3. Cast abutment (1) according to Claim 2, where the first chamfered portion (8) of the first step portion (8, 9) and/or the second chamfered portion (10) of the second step portion (10, 12) are inclined by an angle of 35 to 55 degrees with respect to the longitudinal axis of the cast abutment (1).

4. Cast abutment (1) according to Claim 3, where the angle of the first chamfered portion (8) is approximately 45 degrees and/or the angle of the second chamfered portion (10) is approximately 45 degrees.

5. Cast abutment (1) according to one or more of Claims 1 through 4, further comprising a second circumferential platform (13) bordering on the step portion (10, 12) which is positioned furthest axially.

6. Cast abutment (1) according to one or more of Claims 1 through 5, where the first platform (4) and/or the second platform (13) are inclined by an angle of 80 to 100 degrees with reference to the longitudinal axis of the cast abutment (1).

7. Cast abutment (1) according to Claim 6, where the angle of the first platform (4) is approximately 90 degrees and/or the angle of the second platform (13) is approximately 90 degrees.

8. Cast abutment (1) according to one or more of Claims 1-7, where the radial width of the first platform (4) is approximately 1.5 times the total height of the first step portion (8, 9).

9. Cast abutment (1) according to one or more of Claims 1-7, where the radial width of the first platform (4) is approximately two times the total height of the first step portion (8, 9).

10. Cast abutment (1) according to one or more of Claims 1-9, where the first platform (4) is radially wider than the step portions (8, 9, 10, 12).

11. Cast abutment (1) according to one or more of Claims 1-10, comprising at least three and preferably four step portions.

12. Cast abutment (1) according to one or more of Claims 1-11, having a portion (B) which is free of a modeling aid.

## Revendications

1. Pilier de coulée (1) pour un implant dentaire, comportant :
une partie d'alvéole apicale (2), et
une partie occlusale (7) comportant une zone de collerette circonférentielle apicale (A), **caractérisé par**
une partie de transition (3) bordant la partie d'alvéole (2) coronalement,
la partie occlusale (7) bordant la partie de transition (3) coronalement,
dans lequel la zone de collerette (A) est configurée avec une première plate-forme circonférentielle (4) située axialement plus près, et avec au moins deux zones circonférentielles en gradin (8, 9, 10, 12) adjacentes, et
dans lequel le plus grand diamètre d'une première zone en gradin (8, 9) est plus petit que le plus petit diamètre d'une seconde zone en gradin (10, 12) située apicalement par rapport à la première zone en gradin (8, 9).

2. Pilier de coulée (1) selon la revendication 1, dans lequel chaque zone en gradin (8, 9, 10, 12) est configurée, par rapport à l'axe longitudinal du pilier de coulée (1), avec une partie biseautée (8, 10) et avec une partie sensiblement verticale (9, 12).

3. Pilier de coulée (1) selon la revendication 2, dans lequel la première partie biseautée (8) de la première zone en gradin (8, 9) et/ou la seconde partie biseautée (10) de la seconde zone en gradin (10, 12) est inclinée à un angle de 35 à 55 degrés par rapport à l'axe longitudinal du pilier de coulée (1).

4. Pilier de coulée (1) selon la revendication 3, dans lequel l'angle de la première partie biseautée (8) est d'environ 45 degrés et/ou l'angle de la seconde partie biseautée (10) est d'environ 45 degrés.

5. Pilier de coulée (1) selon l'une quelconque ou plusieurs des revendications 1 à 4, comportant de plus une seconde plate-forme circonférentielle (13) qui borde la zone en gradin (10, 12) axialement la plus large.

6. Pilier de coulée (1) selon l'une quelconque ou plusieurs des revendications 1 à 5, dans lequel la première plate-forme (4) et/ou la seconde plate-forme (13) est inclinée à un angle de 80 à 100 degrés par rapport à l'axe longitudinal du pilier de coulée (1).

7. Pilier de coulée (1) selon la revendication 6, dans lequel l'angle de la première plate-forme (4) est d'environ 90 degrés et/ou l'angle de la seconde plate-forme (13) est d'environ 90 degrés.

8. Pilier de coulée (1) selon l'une quelconque ou plusieurs des revendications 1 à 7, dans lequel la largeur radiale de la première plate-forme (4) représente environ 1,5 fois la hauteur totale de la première zone en gradin (8, 9).

9. Pilier de coulée (1) selon l'une quelconque ou plusieurs des revendications 1 à 7, dans lequel la largeur radiale de la première plate-forme (4) représente environ 2 fois la hauteur totale de la première zone en gradin (8, 9).

10. Pilier de coulée (1) selon l'une quelconque ou plusieurs des revendications 1 à 9, dans lequel la première plate-forme (4) est radialement plus large que les zones en gradin (8, 9, 10, 12).

11. Pilier de coulée (1) selon l'une quelconque ou plusieurs des revendications 1 à 10, comportant au moins trois, et de préférence quatre, zones en gradin.

12. Pilier de coulée (1) selon l'une quelconque ou plusieurs des revendications 1 à 11, comportant une zone qui est dépourvue d'aide au modelage.
